(19) Europäisches Patentamt
European Patent Office
Office européen des brevets

(11) EP 0 478 226 B1

(12) **EUROPEAN PATENT SPECIFICATION**

(45) Date of publication and mention
of the grant of the patent:
**06.05.1998 Bulletin 1998/19**

(51) Int Cl.⁶: **G02B 6/12**, G02F 1/295

(21) Application number: **91308549.4**

(22) Date of filing: **19.09.1991**

(54) **Waveguide-type optical switch**

Optischer Schalter für Wellenleiter

Commutateur optique à guides d'ondes

(84) Designated Contracting States:
**DE FR GB SE**

(30) Priority: **20.09.1990 JP 251515/90**

(43) Date of publication of application:
**01.04.1992 Bulletin 1992/14**

(73) Proprietor: **Oki Electric Industry Co., Ltd.
Tokyo (JP)**

(72) Inventors:
• **Okayama, Hideaki,
c/o Oki Electric Industry Co.Ltd
Minato-ku, Tokyo (JP)**
• **Asahayashi, Issei, c/o Oki Electric Industry Co.Lt
Minato-ku, Tokyo (JP)**

(74) Representative: **Read, Matthew Charles et al
Venner Shipley & Co.
20 Little Britain
London EC1A 7DH (GB)**

(56) References cited:
• **ELECTRONICS & COMMUNICATIONS IN
JAPAN: PART II: ELECTRONICS vol. 72, no. 2,
February 1989, pages 65-77, New York, US; S.
SAWA: "Design Considerations for
Mode-Conversion Type Optical Branching
Waveguides"**
• **15TH EUROPEAN CONFERENCE ON OPTICAL
COMMUNICATION (ECOC'89) vol. 1, 10-14
September 1989, pages 240-243, Gothenburg,
SE; L. THYLEN et al.: " Theoretical and
experimental investigation of 1x2 digital
switches"**
• **Burns W.K., Journ. of Lichtwave Tech. 8(6), 1990,
990-7**

## Description

The present invention relates to an optical Y-branch waveguide switch comprising a central optical waveguide, first and second optical waveguide branches that diverge from a branching region on the central waveguide, and electrodes for electrically controlling the guide synchronism of the branches, each of the branches including first and second branch portions, the first branch portions diverging from the branching region and the second branch portions extending from ends of the first branch portions along respective divergent paths which subtend between them a branching angle which is less than the angle subtended between the first branch portions.

Y-branch structured waveguide optical switches are principal components of optical integrated circuits and are disclosed in literature (a) entitled "Electronic Communication Society Technical Research Report OQE 83-87" in which a waveguide optical switch includes electrodes for electrically controlling guide a synchronism of branched waveguides. Reference is also directed to "Theoretical and Experimental Investigation of 1 x 2 Digital Switches", L. Thylen et al., ECOC 89 Vol. 1, 10-14 September 1989, pp 240-243.

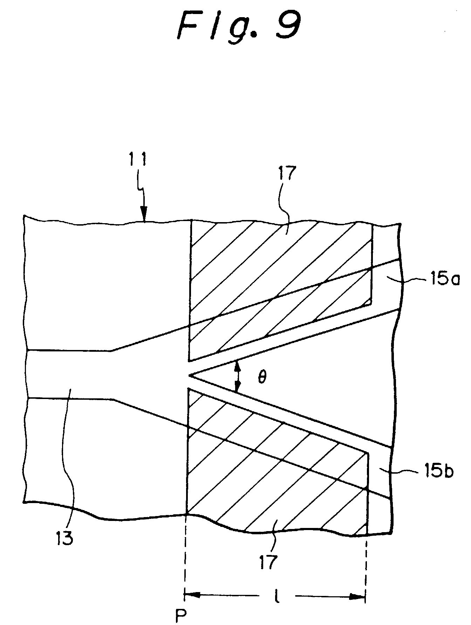

This type of optical switch will now be described in more detail with reference to Figure 9 and comprises a substrate 11 formed of $LiNbO_3$, a central optical waveguide 13 which has a branching region 14, first and second waveguide branches 15a and 15b which diverge from the waveguide 13 at a branching angle $\theta$ from a branching point P, and electrodes 17 (hatched portion in Figure 9) for producing an optical coupling between the first and second branches, the electrodes having a length l between the branching point P and a position where the distance between the branches is sufficiently great that the coupling intensity between the waveguide branches is negligible. The electrodes 17 control the refractive index in the waveguide branches 15a and 15b.

The switch is characterised in that an ON-OFF digital operation is performed utilising evanescent mode coupling, which is concentrated in the waveguide branch 15a or 15b where the refractive index is enhanced, without utilising an interference effect.

In order to reduce the drive voltage for the electrodes 17 to a low value, the branching angle $\theta$ should be made small, as disclosed in the literature (a). Accordingly, the length l of the electrodes (refer to Figure 9) where coupling between the waveguide branches is effective, is thereby lengthened, which has generated the problem that the entire length of the device (length of l in Figure 9 [horizontal length]) is increased.

The present invention seeks to reduce the undue length of the conventional optical Y-branch waveguide switch.

Burns, W. K., "Voltage-Length Product for Modal Evolution-Type Digital Switches", Journal of Lightwave Technology, vol. 8, no. 6, June 1990 hints at the possibility of obtaining a reduced V-L product using curvilinear branches. However, the topology proposed is voltage dependent.

To achieve the afore-mentioned object, an waveguide optical switch according to the present invention is characterised in that the second branch portions each extend from the end of the corresponding first branch portion to a termination region and are each arranged so as to satisfy:

$$0.003 < R < 0.03$$

where $R = K_e/K_o$

$K_e$ being the optical coupling coefficient between the second branch portions at the termination region thereof ($P_e$), and

$K_o$ being the optical coupling coefficient between the second branch portions at the junction ($P_o$) thereof with the end of the corresponding first branch portion.

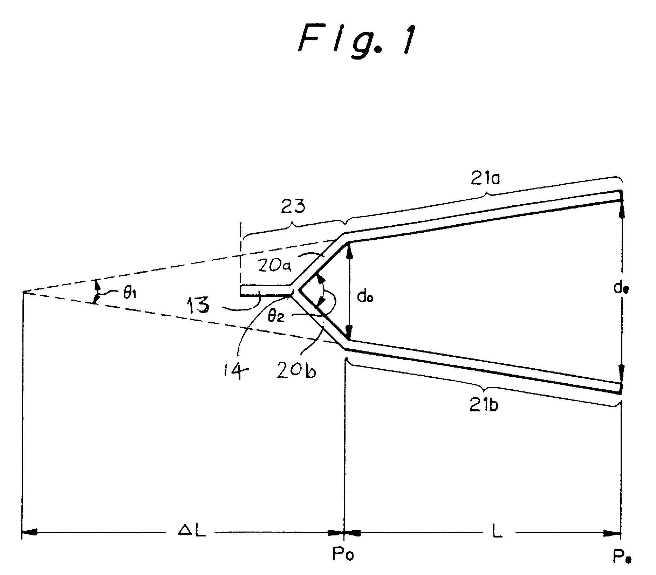

When the waveguide branches are rectilinear (refer to Figure 1), the branching angle $\theta_1$ is an angle defined by extending the lines of the second branch portions until they cross.

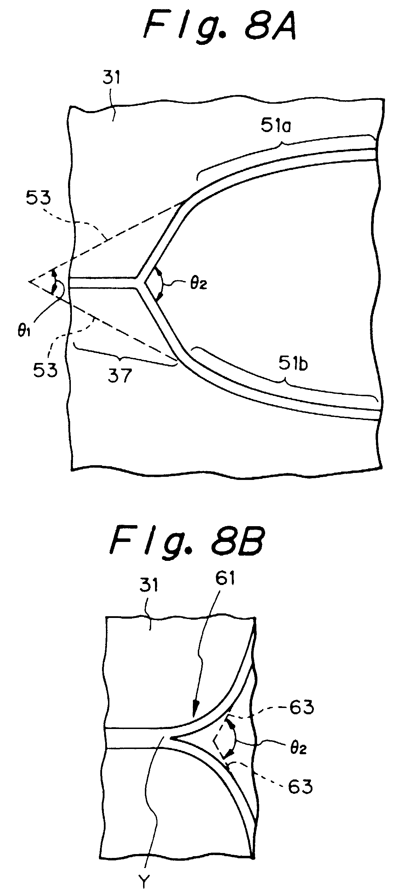

The branching angle $\theta_1$ may also be an angle defined by the intersection of tangential lines along the second branch portions, where the ends of the first branch portions are connected to the second branch portions (refer to Figure 8A), when the waveguide branch portions are curved.

In order that the invention may be more fully understood embodiments thereof will now be described by way of example with reference to the accompanying drawings in which:

Figure 1 is a schematic view showing a basic structure of an optical Y-branch waveguide switch according to the present invention;
Figures 2 to 5 are schematic plan views of waveguide optical switches according to first to fourth embodiments of the present invention;
Figure 6 is a graph showing a crosstalk property of a switch according to the present invention;
Figure 7 is a graph showing a switching characteristic of a switch according to the present invention;
Figures 8A and 8B are first and second modified embodiments; and
Figure 9 is a schematic plan view of a conventional waveguide-type optical switch.

Figure 1 is a plan view of the basic structure of an optical switch according to the present invention. As can be seen from Fig. 1, the Y-branch waveguide switch comprises a central waveguide 13 with first and second waveguide branches, each branch comprising a first branch portion 20a, 20b and a second branch portion 21a, 21b. The first branch portions diverge from a branching region 14 on the central waveguide 13 and have ends arranged on line Po, coupled to the second branch portions 21a, 21b. The junctions of the first and second branch portions for the two branches are spaced apart by a distance $d_o$. The second branch portions 21a, 21b also diverge with starting ends aligned on Po and terminating ends aligned on Pe, spaced apart by a distance $d_e$.

It will be seen that the central waveguide 13 and the first branch portions 20a, 20b form collectively a Y-waveguide structure, which will be referred to hereinafter as Y-waveguide 23. The second branch portions 21a, 21b can be considered as first and second branched waveguides and will be referred to as such hereinafter, connected to ends of the Y-waveguide structure 23.

The paths of the two branched waveguides 21a and 21b, as shown in dotted lines, subtend a branching angle $\theta_1$. Control electrodes (not shown) are associated with the branched waveguides 21a and 21b, as will be explained in more detail hereinafter.

The Y-waveguide 23 has a branching angle $\theta_2$ between the first branch portions 20a, band the branching angle $\theta_2$ is greater than the branching angle $\theta_1$. As will be evident from the following description, the switch of the present invention has the advantage over the prior art switch shown in Figure 9 that the portion AL in shown in Figure 1 can be made shorter and so the entire length of the waveguide-type optical switch can be shortened.

Furthermore, a low drive voltage can be utilised in the same way as in the conventional switch by properly selecting the location and disposition of the branched waveguides. This can be achieved by satisfying the expression $0.003 < R < 0.3$ where R is the guide coupling coefficient ratio of $K_e$ to $K_o$, $R = K_e / K_o$, where $K_e$ is the optical coupling coefficient between the branched waveguides at the location where the branched waveguides terminate (Pe) and $K_o^-$ is the coupling coefficient between the branched waveguides at the location where the branched waveguides are connected to the Y-waveguide (Po).

First Embodiment (Figure)

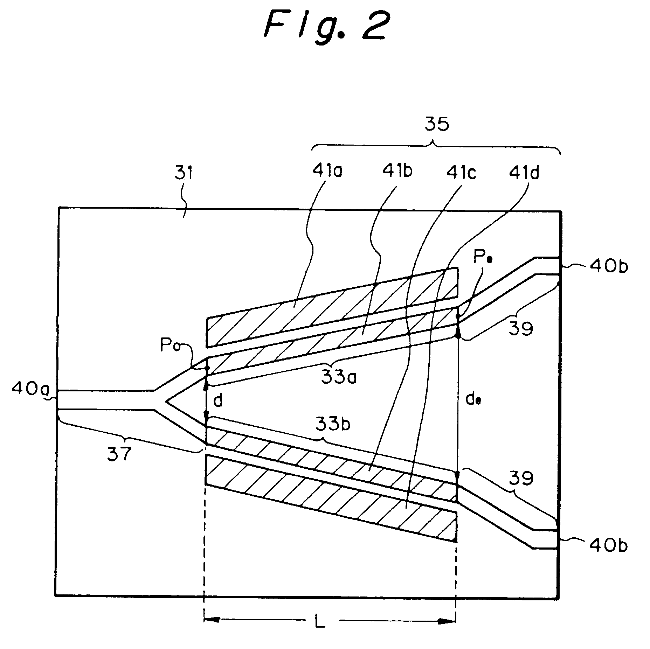

A first more detailed embodiment of switch according to the present invention will now be described with reference to Figure 2 which shows a plan view thereof.

A first branched waveguide 33a and a second branched waveguide 33b are respectively disposed on a substrate 31 with a branching angle $\theta_1$ (refer to Figure 1). The interval or separation between the first and second waveguides 33a and 33b is $d_o$ at the starting end $P_o$ of the first and second waveguides 33a and 33b and $d_e$ at the terminating end thereof where $d_o < d_e$.

The switch comprises the first and second waveguides 33a and 33b, a Y-waveguide 37 having a branching angle $\theta_2$ (where $\theta_2 > \theta_1$) connected to the first and second branched waveguides 33a and 33b at the starting end thereof (refer to Figure 2), electrode structure 35 (hatched portion in Figure 2) for varying the refractive index and propagation coefficient in the first and second branched waveguides for thereby generating guide synchronism between the first and second branched waveguides 33a and 33b, output ports 40, and waveguides 39 for connecting the branched waveguides to the output ports 40.

The substrate 31 preferably exhibits a large electrooptic effect for an electric field applied in the thickness direction of the substrate, such as $LiNbO_3$.

The branched waveguides 33a and 33b, the Y-waveguide 37, the waveguide 39 and the electrode structure 35 are fabricated by conventional techniques.

The electrode structure 35 comprises a first electrode 41a disposed along the side of the first branched waveguide 33a which is opposite to the second branched waveguide 33b, a second electrode 41b which overlies the first branched waveguide 33a, a third electrode 41c disposed along the side of the second branched waveguide 33b opposite to the first branched waveguide 33a, and a fourth electrode 41d which overlies the second waveguide 33b.

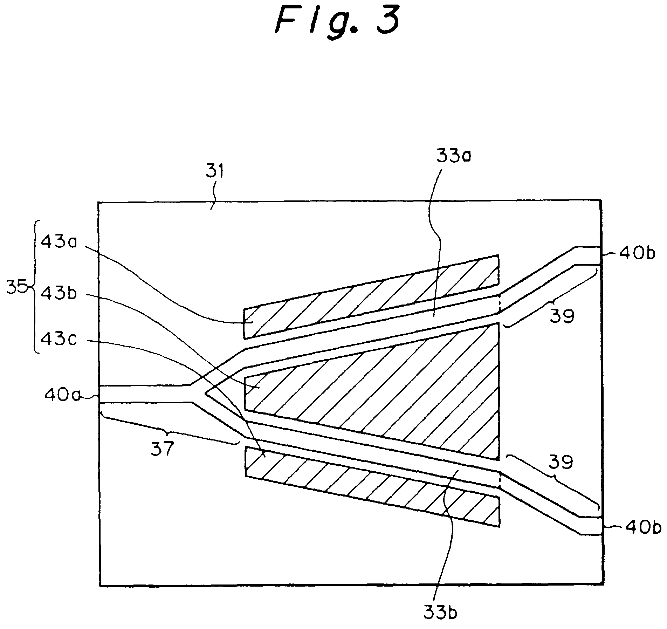

The second to fourth embodiments of the present invention as illustrated in Figures 3 to 5 and explained hereafter have the same waveguide structure as the first embodiment but differ in the disposition of the electrode structure that controls the electric field in the direction perpendicular to the thickness direction of the substrate 31. Accordingly, only the disposition of the electrode structure 35 will be described in relation to the second to fourth embodiments.

Second Embodiment (Figure 3)

The electrode structure 35 according to the second embodiment comprises a first electrode 43a disposed along the side of the first branched waveguide 33a opposite to the second branched waveguide 33b, a second electrode 43b disposed between the first and second branched waveguides 33a and 33b, and a third electrode 43c disposed along the side of the second branched waveguide 33b which is opposite to the first branched waveguide 33a as shown in Figure 3. The electric field is in parallel with the substrate 31.

The waveguide switch according to the first and second embodiments is particularly suited to use when the refractive index is forced to vary sharply at the location where the first and second branched waveguides 33a and 33b are connected to the Y-waveguide 37.

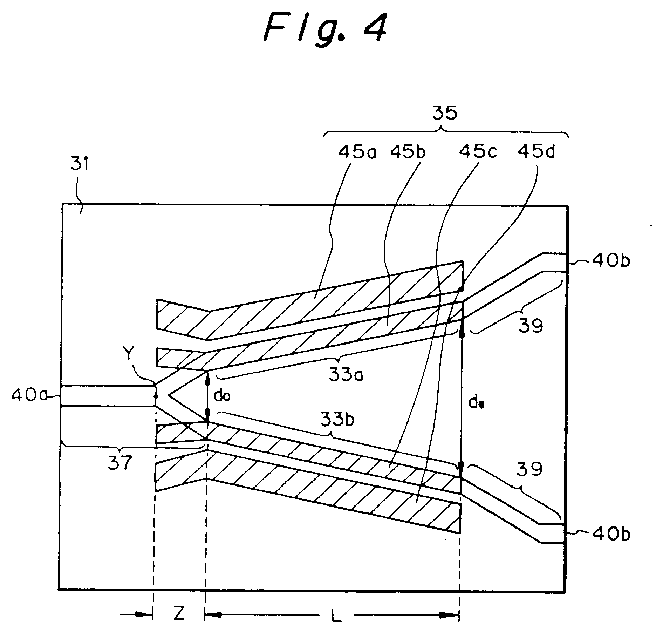

Third Embodiment (Figure 4)

The electrode structure 35 according to the third embodiment comprises a first electrode 45a that is disposed along the side of the first branched waveguide 33a which is opposite to the second branched waveguide 33b and also extends to the side of the Y-waveguide 37, a second electrode 45b which overlies the first branched waveguide and extends to the side of the Y-waveguide 37, a third electrode 45c disposed along the side of the second branched waveguide 33b that is opposite to the first branched waveguide 33a and extends to the side of the Y-waveguide 37, and a fourth electrode 45d which overlies the second waveguide 33b and also extends to the side of the Y-waveguide 37 as shown in Figure 4.

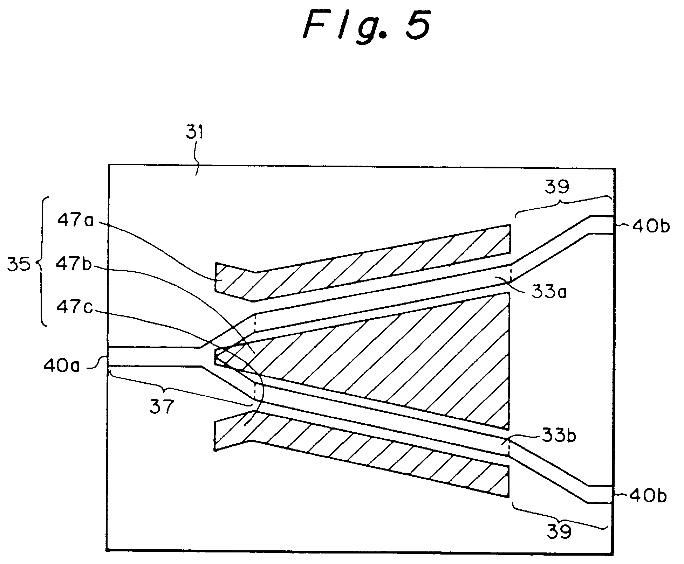

Fourth Embodiment (Figure 5)

The electrode structure according to the fourth embodiment comprises a first electrode 47a which is disposed along the side of the first branched waveguide 33a that is opposite to the second branched waveguide 33b and extends to the side of the Y-waveguide 37, a second electrode 47b disposed between the first and second branched waveguides 33a and 33b so as to extend the side of the Y-waveguide 37 and a third electrode 47c disposed along the side of the second branched waveguide 33b that is opposite to the first branched waveguide 33a so as to extend to the side of the Y-waveguide 37, as shown in Figure 5.

The waveguide switch according to the third and fourth embodiments as illustrated in Figures 4 and 5 is particularly adapted for use when the refractive index is forced to vary gently at the location extending from the Y-waveguide 37 to the branched waveguides 33a and 33b since the electrodes 35 extends to the side of the Y-waveguide 37.

In the waveguide switch, an optical field is concentrated in one of the branched waveguides when the value of a parameter $X_e$ is sufficiently large at the terminating end $P_e$ of the first branched waveguide 33a or the second branched waveguide 33b as shown in Figure 2, the parameter $X_e$ being expressed in the following equation (1).

$$X_e = \Delta\beta/2K_e \qquad (1)$$

This is well known *per se* in relation to Y-branch switches and disclosed in the book entitled "Guided-Wave Optoelectronics", Theodor Tamir (Ed.), Chapter 3, published by Springer-Verlag in 1988. In equation (1), $K_e$ is the coupling coefficient between the branched waveguides 33a and 33b at the terminating end thereof and $\Delta\beta$ (guide synchronism) is the difference between the propagation coefficient of the first branched waveguide 33a and that of the second branched waveguide 33b and is a function of the input voltage applied to the electrode structure 35. "The value $X_e$ is sufficiently large" as stated above, means that the value $X_e$ needs to be greater than the value given in the following equation (2) which is cited in the above mentioned book, hereinafter refered to as literature (b).

$$2X_e = X_t^{-1/2} \qquad (2)$$

where $X_t$ is an amount of crosstalk tolerable between the first and second branched waveguides 33a and 33b.

Accordingly, it is evident from equation (1) that the coupling coefficient of the branched waveguides at the termination end thereof needs to be small in order to make the value $X_e$ large while the propagation coefficient variation $\Delta\beta$ is kept small, namely, the applied voltage to the electrodes 35 is kept small, since the propagation coefficient variation $\Delta\beta$ is proportional to the applied voltage. However, the lower limit of the propagation coefficient variation $\Delta\beta$ should be paid attention since the crosstalk $X_t$ becomes large from the equations (1) and (2) if the propagation coefficient variations $\Delta\beta$ is made small.

The relation between the coupling coefficient $K_e$ and the interval or separation $d_e$ between the branched waveguides 33a and 33b at the terminating end $P_e$ of the branched waveguides is given by the following expression (3).

$$d_e = - \ln(K_0/K_1)\, \gamma_3 \qquad (3)$$

where $K_1$ is a constant and $\gamma_3$ is a transverse momentum component of the optic field in the region between waveguides.

It is known that the crosstalk property is liable to deteriorate in this type of switch when mode conversion occurs (conversion from the first order local normal mode to the second order local normal mode). The peak value $\gamma$ of an index representing likelihood of mode conversion is expressed in the following equation (4) (cited by the literature (b)).

$$\gamma = \frac{\gamma_3}{\Delta\beta} \cdot \frac{\theta_1}{\sqrt{27}} \qquad (4)$$

where $\theta_1$ corresponds to the branching angle $\theta$ of the branched waveguides 15a and 15b according to the conventional waveguide-type optical switch as illustrated in Figure 9 and corresponds to the branching angle $\theta_1$ of the branched waveguides 33a and 33b according to the present optical switch (refer to Figure 1).

It is evident from the equation (4) that the mode conversion is not liable to occur if both the branching angle $\theta$ in the conventional optical switch and the branching angle $\theta_1$ in the present optical switch are small.

However, in the arrangement of the conventional switch, as explained with reference to Figure 9, the lengths of the electrodes should be made long when the branching angle is small, which results in the problem that the entire length of the device becomes unduly long. On the contrary, in the arrangement of the present waveguide optical switch, as explained with reference to Figure 1, the length of the device can be made shorter since the Y-waveguide 37 having the branching angle $\theta_2$ ($\theta_2 > \theta_1$) is connected to the branched waveguides 33a and 33b which are disposed in the branching angle $\theta_1$, and separated by the interval $d_o$ at the starting end $P_o$.

The manner in which the interval $d_o$ may be determined will be described in more detail hereinafter.

Mode conversion also occurs due to the sudden occurrence of the propagation coefficient variation $\Delta\beta$ in the propagating direction of light at the starting end $P_o$ of the branched waveguide 33a and 33b. The power involved in the mode conversion at the starting end $P_o$ becomes $X_o^2/4$ in the following equation (5) assuming that $X_o$ is given as the parameter thereof based on the literature (b).

$$X_o = \Delta\beta/2K_o \qquad (5)$$

where $K_o$ is a coupling coefficient between the branched waveguides 33a and 33b at the starting end $P_o$ thereof, i.e. at the location where the Y-waveguide is connected to the branched waveguides.

From the equation (5), if the propagation coefficient variation $\Delta\beta$ is large, the value $X_o$ is increased. As a result, it is understood that the power involved in the mode conversion is increased, which results in increased crosstalk.

It is possible to obtain a practical Y-branched waveguide optical switch with reduced crosstalk if the relationship $\Delta\beta'/\Delta\beta \simeq 4$ is satisfied where $\Delta\beta$ is the propagation coefficient variation satisfying the expression of the amount of crosstalk $Xt \simeq 0.032$ (crosstalk is -15 dB) at the termination end $P_e$ while $\Delta\beta'$ is the propagation coefficient variation satisfying the expression of the amount of the mode conversion $X_o^2/4 \simeq 0.032$, which in turn provides satisfactory crosstalk minimisation at the starting end $P_o$. Under this condition, it is possible to obtain a practical optical switch having crosstalk which is substantially -15dB until the voltage reaches a value four times larger than the minimum voltage which is applied to the optical switch for obtaining 15dB as the amount of the crosstalk.

When the value $X_t = 0.032$ is substituted in the expression (2) and the result is substituted into the expression (1), the following equation (6) is obtained.

$$\Delta\beta/K_e = 5.6 \qquad (6)$$

Expression (7) is established from the expression $\Delta\beta'/\Delta\beta \simeq 1$, the expression (5) and the equation $X_o^2/4 \simeq 0.032$

$$\Delta\beta'/K_o = 4 \, \Delta\beta/K_o \simeq 0.72 \qquad (7)$$

The coupling coefficient ratio R given by

$$R = K_e/K_o \simeq 0.03 \qquad (8)$$

The relation between the coupling coefficient $K_o$ and the separation $d_o$ between the branched waveguides is considered to be of the same form as expression (3) and hence the following expression is established.

$$d_o = - \ln (K_0/K_1) \, \gamma_3 \qquad (9)$$

Accordingly, the value do can be determined so that the coupling coefficient Ko in expression (9) satisfies the expression $K_e/K_o \simeq 0.03$ where do is the separation at the starting end of the branched waveguides and $K_e$ is the coupling coefficient at the termination end of the branched waveguides.

Actually, it is possible to obtain a Y-branch waveguide switch having no practical problems wherein the coupling coefficient ratio $K_e/K_o$, i.e. R, is not limited to $R \simeq 0.030$, but may be of a value satisfying the expression $0.003 < R < 0.03$, according to the result of the numerical calculation.

The following expression is established based on the literature (b).

$$\gamma_3\theta_1 L = \gamma_3(d_e - d_o) = - \ln R$$

where L is the length of the branched waveguide 33a or 33b (assuming that it is the length in horizontal direction as illustrated in Figure 2), $\theta_1$ is the branching angle of these branched waveguides, $\gamma_3$ is the transverse momentum component of the optic field in the region between waveguides, $d_o$ is the separation between the branched waveguides at the starting end thereof, $d_e$ is the separation between the branched waveguides at the terminating end thereof and R is the coefficient coupling ratio.

If the expression set forth in the preceding paragraph is substituted into equation (4), the following result is obtained:

$$\gamma = \frac{-1}{\Delta\beta L} \cdot \frac{\ln R}{27} \qquad (10)$$

It is to be understood from equation (10) that the smaller the peak value $\gamma$ of the index representing likelihood of mode conversion, the larger is the propagation coefficient variation $\Delta\beta$. The value $\Delta\beta/K_e$ at the minimum switching voltage is 5.6 from the expression (6), and if this is substituted into equation (10) and the thus substituted expression is transformed with use of the coupling coefficient ratio, $R=K_e/K_o$, the following result is obtained

$$\gamma = \frac{-1}{5.6 K_e L} \cdot \frac{lnR}{\sqrt{27}}$$

$$= \frac{-1}{5.6 R K_0 L} \cdot \frac{lnR}{\sqrt{27}} \qquad (11)$$

If the amount of the crosstalk is reduced to. less than 15dB, the condition $\gamma < 1/2 \sqrt{27}$ is necessitated. From this condition and the expression (11), the following can be derived.

$$K_0 L > \frac{2(-lnR)}{5.6 R} \qquad (12)$$

This equation can be expressed as follows, assuming that $R \simeq 0.03$.

$$K_o L > 42 \qquad (13)$$

In a practical example, if the length L is 1 cm, the separation $d_o$ is about 1μm and the separation $d_e$ is about 8μm from the expression (9), so that the separations $d_o, d_e$ may satisfy this condition .

The following geometrical expression is established in the switch according to the first to fourth embodiments, which is evident from Figure 1.

$$L + \Delta L = \frac{d_e + 2W}{\theta_1}$$

$$\Delta L = \frac{d_o + 2W}{\theta_1} \qquad (14)$$

where W is a width of the waveguide and ΔL approximates to the length by which the device of the present invention to be shortened compared with that of the conventional device (Figure 9).

The expressions (14) can be written as follows:

$$\frac{\Delta L}{L + \Delta L} = \frac{d_o + 2W}{d_e + 2W} \qquad (15)$$

By way of specific example, if the width W=7μm, the separation $d_o$=1μm and the separation $d_e$=8μm are substituted in the expression (15), the following result is obtained.

$$\frac{\Delta L}{L + \Delta L} = \frac{15}{23} \simeq 0.68 \qquad (16)$$

It is evident from expression (16) that the length of the device according to the present invention is shortened to approximately one third of the length of a corresponding conventional Y-branch switch.

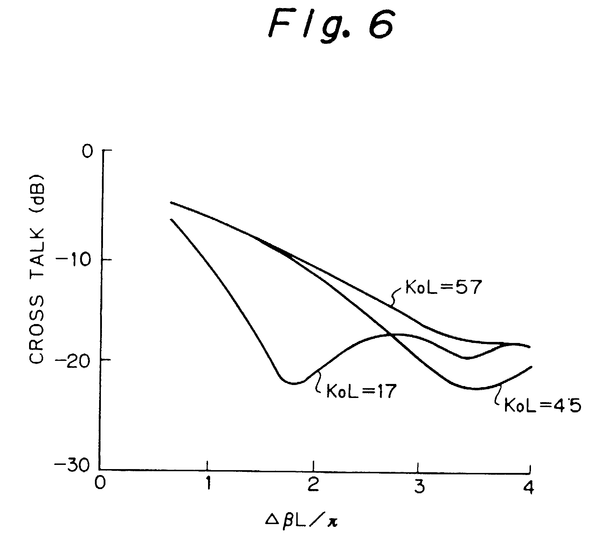

The relation between the amount of the crosstalk and the propagation coefficient variation Δβ can be found for the specific numerical example discussed above by solving the coupling equation with use of the parameter $K_o L$, when the coupling ratio is R=0.03 in the branched waveguides 33a and 33b, and they have a width W=7μm, and separations $d_o$=1μm and $d_e$=8μm. the result is illustrated in Figure 6 wherein the vertical axis represents the amount of crosstalk and the lateral axis represents $\Delta\beta L/\pi$.

It is evident from Figure 6 that a preferred crosstalk property can be obtained if the relation $K_o L = 57.45$ is established. If the inequality $K_o L < 42$ is established, the peak value γ representing the index of likelihood of the mode conversion becomes large. In this case, crosstalk should increase. However, there is a likelihood that the crosstalk will in fact be reduced due to the interference between the first and second local normal modes as evident from the example of the expression $K_o L=17$. Thus $K_o$ is not a main parameter but $K_e/K_o$ is a main parameter according to the present invention.

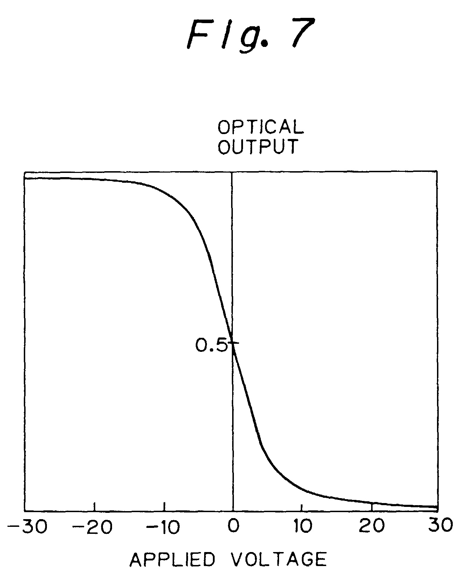

Switching characteristics of an experimentally fabricated switch according to the invention is illustrated in Figure 7 in which the vertical axis represents optical output and the lateral axis represents the voltage applied to the electrodes of the switch. Light having a wavelength of 1.55 μm was used in a verification run. It will be understood that the device is operated as 1 x 2 optical switch. The experimentally fabricated device was of the same structure as shown in Figure 4. In more detail, it comprises a Z plate formed of $LiNbO_3$ as the substrate, the Y-waveguide 37 and the branched waveguides 33a and 33b wherein the separation $d_e$ between the branched waveguides is 8μm at the termination end thereof, the branching angle $\theta_1$ is 1.6 mrad, the width of each of the branched waveguides is 7μm, the length (horizonal length) Z extending from the branching point of the Y-waveguide 37 to the terminating end of the branched waveguides (refer to Figure 4) is 2mm and the length L of the branched waveguide is 1 cm. The waveguides are fabricated by diffusing a thin film of titanium having a thickness of 600 angstroms at a temperature of 1050°C for eight hours. The electrode 35 is formed of a thin film of gold having a thickness of 2000 angstroms which is provided on the branched waveguides while they interpose a film formed of $SiO_2$ having the thickness of 3000 angstroms therebetween. It will of course be understood that these fabricating conditions are but one example and others will be apparent to those skilled in the art.

The dimensions of the branched waveguides L+ΔL of the conventional switch in Figure 9 becomes about 2cm if the conventional device has a branching angle of 1.6 mrad and the separation at the terminating end $d_o$ is 8μm. The length L is however 1 cm according to the experimentally fabricated device and therefore, since Z is small, the length of the device according to the invention is reduced to approximately one half of that of the conventional device.

Modification

The branched waveguides are rectilinear in the first to fourth embodiments, but they may be curved. Figure 8(A) shows one example of the curved branched waveguides. Branched waveguides 51a and 51b provided with electrodes thereon (not shown) have a branching angle $\theta_1$, a separation do at the starting ends thereof and a separation $d_e$ at the terminating ends thereof. The starting ends of the branched waveguides 51a and 51b are connected to Y-waveguide 37 having a branching angle $\theta_2$. The branching angle $\theta_2$ is determined by extending tangential lines 53 at the junctions between the Y-waveguide 37 and the branched waveguides 51a and 51b toward the Y-waveguide 37 in order to subtend an angle $\theta_2$ at their crossing point

The branched waveguides of the Y-waveguide, namely the first branch portions, may be curved. In this case, the Y-waveguide is preferred to have its branching angle $\theta_2$ as illustrated in Figure 8(B). In more detail, the separation between waveguides of the Y-waveguide preferably exponentially increases in a direction away from the branch starting end Y shown in Figure 8(B). The branching angle $\theta_2$ is the angle subtended by the tangential lines 63 at the junction between the Y-waveguide 37 and the branched waveguides 33a and 33b or between the Y-waveguide 37 and the branched waveguides 51a and 51b.

**Claims**

1. An optical Y-branch waveguide switch comprising a central optical waveguide, first and second optical waveguide branches (20a,21a;20b,21b) that diverge from a branching region (14) on the central waveguide, and electrodes for electrically controlling the guide synchronism of the branches, each of the branches including first (20a,b) and second (21a,b) branch portions, the first branch portions (20a,b) diverging from the branching region (14) and the second branch portions (21a,b) extending from ends of the first branch portions along respective divergent paths which subtend between them a branching angle ($\theta_1$) which is less than the angle ($\theta_2$) subtended between the first branch portions (20a,b), **characterised in that** the second branch portions each extend from the end of the corresponding first branch portion to a termination region and are each arranged so as to satisfy:

$$0.003 < R < 0.03$$

where $R = K_e/K_o$

$K_e$ being the optical coupling coefficient between the second branch portions at the termination region thereof ($P_e$), and
$K_o$ being the optical coupling coefficient between the second branch portions at the junction ($P_o$) thereof with the end of the corresponding first branch portion.

2. A switch according to claim 1, wherein the second branch portions are longer than the first branch portions for each of the branches and the first branch portions have a length that is substantially greater than their width.

3. A switch according to claim 1 or 2, wherein the second branch portions (33a,b) each extend along rectilinear paths.

4. A switch according to any one of claims 1, 2 or 3, wherein the second branch portions (51a,b) each extend along curved paths, the branching angle between the first branch portions being defined by the angle ($\theta_2$) between tangents (53) to the paths of the first branch portions at the junctions thereof with the second branch portions.

5. A switch according to any preceding claim conforming to the criterion:

$$K_oL> \frac{2(-lnR)}{5.6R}$$

where L is the length of the portion of the switch comprising the second branch portions.

**Patentansprüche**

1. Optischer Schalter mit Y-Wellenleiterzweigen, der einen zentralen Lichtwellenleiter, einen ersten und einen zweiten Lichtwellenleiter-Zweig (20a,21a; 20b,21b), die von einem Verzweigungsbereich (14) des zentralen Wellenleiters auseinanderlaufen, und Elektroden zur elektrischen Steuerung des Leitsynchronismus der Zweige aufweist, wobei jeder Zweig einen ersten (20a,b) und einen zweiten (21a,b) Zweigabschnitt enthält, wobei die ersten Zweigabschnitte (20a,b) von dem Verzweigungsbereich (14) auseinanderlaufen und wobei sich die zweiten Zweigabschnitte (21a,b) von Enden der ersten Zweigabschnitte entlang jeweiligen auseinanderlaufenden Wegen erstrecken, die einen Verzweigungswinkel ($\theta_1$) zwischen sich begrenzen, der kleiner als der zwischen den ersten Zweigabschnitten (20a,b) begrenzte Winkel ($\theta_2$) ist, **dadurch gekennzeichnet, daß** sich die zweiten Zweigabschnitte jeweils vom Ende des entsprechenden ersten Zweigabschnitts nach einem Abschlußbereich erstrecken und jeweils so angeordnet sind, daß folgendes erfüllt ist:

$$0,003 < R < 0,03$$

wobei $R = K_e/K_o$

$K_e$ der optische Kopplungskoeffizient zwischen den zweiten Zweigabschnitten in deren Abschlußbereich ($P_e$) ist, und
$K_o$ der optische Kopplungskoeffizient zwischen den zweiten Zweigabschnitten an deren Verbindung ($P_o$) mit dem Ende des entsprechenden ersten Zweigabschnitts ist.

2. Schalter gemäß Anspruch 1, bei dem für jeden Zweig die zweiten Zweigabschnitte länger als die ersten Zweigabschnitte sind und bei dem die ersten Zweigabschnitte eine Länge haben, die wesentlich größer als ihre Breite ist.

3. Schalter gemäß Anspruch 1 oder 2, bei dem sich die zweiten Zweigabschnitte (33a,b) jeweils entlang geradlinigen Wegen erstrecken.

4. Schalter gemäß einem der Ansprüche 1, 2 oder 3, bei dem sich die zweiten Zweitabschnitte (51a,b) jeweils entlang gekrümmten Wegen erstrecken, wobei der Verzweigungswinkel zwischen den ersten Zweigabschnitten durch den Winkel ($\theta_2$) zwischen Tangenten (53) an den Wegen der ersten Zweigabschnitte an deren Verbindungen mit den zweiten Zweigabschnitten definiert ist.

5. Schalter gemäß einem der vorhergehenden Ansprüche, der folgendes Kriterium erfüllt:

$$K_o L > \frac{2(-\ln R)}{5,6 R}$$

wobei L die Länge des Abschnitts des Schalters ist, der die zweiten Zweigabschnitte aufweist.

**Revendications**

1. Commutateur à guide d'ondes optique à dérivations en Y comprenant un guide d'ondes optique central, des première et seconde dérivations de guide d'ondes optique (20a, 21a ; 20b, 21b) qui divergent depuis une région de dérivation (14) sur le guide d'ondes central, et des électrodes destinées à commander électriquement le synchronisme de guidage des dérivations, chacune des dérivations comprenant des première (20a,b) et seconde (21a,b) parties de dérivation, les premières parties de dérivation (20a, 20b) divergeant depuis la région de dérivation (14) et les secondes parties de dérivation (21a,b) s'étendant depuis les extrémités des premières parties de dérivation suivant des chemins divergents respectifs qui sous-tendent entre eux un angle de dérivation ($\theta_1$) qui est inférieur à l'angle ($\theta_2$) sous-tendu entre les premières parties de dérivation (20a,b), caractérisé en ce que les secondes parties de dérivation s'étendent chacune de l'extrémité de la première partie de dérivation correspondante à une région de terminaison et sont chacune agencées de façon à satisfaire à :

$$0,003 < R < 0,03$$

où $R = K_e/K_o$

$K_e$ étant le coefficient de couplage optique entre les secondes parties de dérivation à leur région de terminaison ($P_e$), et
$K_o$ étant le coefficient de couplage optique entre les secondes parties de dérivation à leur jonction ($P_o$) avec l'extrémité de la première partie de dérivation correspondante.

2. Commutateur selon la revendication 1, dans lequel les secondes parties de dérivation sont plus longues que les premières parties de dérivation pour chacune des dérivations, et les premières parties de dérivation ont une longueur qui est sensiblement supérieure à leur largeur.

3. Commutateur selon la revendication 1 ou 2, dans lequel les secondes parties de dérivation (33a,b) s'étendent chacune suivant des chemins rectilignes.

4. Commutateur selon l'une quelconque des revendications 1, 2 ou 3, dans lequel les secondes parties de dérivation (51a,b) s'étendent chacune suivant des chemins incurvés, l'angle de dérivation entre les premières parties de dérivation étant défini par l'angle ($\theta_2$) entre les tangentes (53) aux chemins des premières parties de dérivation à leurs jonctions avec les secondes parties de dérivation.

5. Commutateur selon l'une quelconque des revendications précédentes, répondant au critère suivant :

$$K_o L > \frac{2(-\ln R)}{5,6 R}$$

où L est la longueur de la partie du commutateur comprenant les secondes parties de dérivation.

# F I g. 1

# Fig. 2

# F I g. 3

# Fig. 4

# Fig. 5

# Fig. 6

# F l g. 7

# Fig. 8A

# Fig. 8B

# Fig. 9